# EUROPEAN PATENT SPECIFICATION

(11) **EP 4 485 611 B1**
(45) Date of publication and mention of the grant of the patent: **02.12.2026**
(21) Application number: 23796376.4
(22) Date of filing: 25.04.2023
(51) Int. Cl.: H01M 10/12, H01M 4/14, H01M 50/463, H01M 50/466

(54) **LEAD-ACID BATTERY**
BLEISÄUREBATTERIE
BATTERIE AU PLOMB-ACIDE

(30) Priority: 26.04.2022 JP 2022072545
(43) Date of publication of application: 01.01.2025
(73) Proprietor: GS Yuasa International Ltd., Kisshoin, Minami-ku, Kyoto-shi, Kyoto 601-8520 (JP)
(72) Inventor: KOJIMA, Rikio, Kyoto-shi, Kyoto 601-8520 (JP)
(74) Representative: Isarpatent
(86) International application number: PCT/JP2023/016281
(87) International publication number: WO 2023/210636

(56) References cited:
- WO-A1-2019/188056
- WO-A1-2021/084879
- JP-A- 2020 174 058
- JP-A- 2020 174 058
- JP-A- 2021 111 472
- JP-A1- WO2019 188 056

## Description

### TECHNICAL FIELD

The present invention relates to a lead-acid battery.

### BACKGROUND ART

Lead-acid batteries are in use for various applications, including automotive and industrial applications. The lead-acid batteries include a negative electrode plate, a positive electrode plate, a separator (or mat), and an electrolyte solution and the like. Each plate includes a current collector and an electrode material.

Patent Document 1 discloses a lead-acid battery including a positive electrode and a negative electrode facing each other with a separator interposed therebetween, and an electrolyte solution,
wherein the separator includes a convex rib and a base part supporting the rib, and contains polyolefin and silica,
a height H of the rib is 1 mm or less,
a thickness T of the base part is 0.05 mm or more,
the electrolyte solution contains aluminum ions, and
a concentration of the aluminum ions in the electrolyte solution is 0.01 to 0.3 mol/L.

Patent Document 2 proposes a flooded-type lead-acid battery including a paste-type positive electrode plate, a paste-type negative electrode plate, and a separator interposed between the plates, the separator including a plurality of vertical ribs extending in a vertical direction and formed on a thin film serving as a base,
wherein a base thickness T1 (mm) of the separator, a distance T2 (mm) between the positive electrode plate and the negative electrode plate facing each other with the separator interposed therebetween, a total thickness T3 (mm) of the separator at positions where the vertical ribs are formed, and an interval W (mm) between the vertical ribs satisfy relationships represented by the following formulas (1) and (2). $1.5 \leq \left(T2-T1\right) \times W \leq 3.5$ Formula (1) $0.8 \leq T 3 / T 2 \leq 1.1$ Formula (2)

Patent Document 3 proposes a method for producing a lead-acid battery in which a paste mainly composed of lead oxide, dilute sulfuric acid, and water is filled in a grid also serving as a current collector, and then an aqueous dilute sulfuric acid solution having a specific gravity of 1.00 to 1.20 is sprayed to a plate in which the paste before curing and drying has plasticity or the plate is pressed in a state of being wetted with the aqueous solution, so that the surface of the plate is smoothed.

Patent Document 4 proposes a lead-acid battery in which an element formed by stacking a plurality of positive electrode plates and a plurality of negative electrode plates with separators, each of separator being interposed between the plates, is housed in a cell chamber together with an electrolyte solution,
wherein the positive electrode plate includes a positive electrode grid made of lead or a lead alloy not containing antimony, and a positive active material made of lead oxide and filled in the positive electrode grid,
the negative electrode plate includes a negative electrode grid made of lead or a lead alloy not containing antimony, a surface layer formed on a surface of the negative electrode grid and made of a lead alloy containing antimony, and a negative active material made of lead oxide and filled in the negative electrode grid, and
when the mass of the positive electrode active material per cell chamber is represented by M_{P} and the mass of sulfuric acid contained in the electrolyte solution is represented by M_{S}, a mass ratio M_{S}/M_{P} is in the range of 0.50 to 0.74, and the surface layer is made of a Pb-Sb alloy having an antimony content of 1.0 to 5.0% by mass.
WO2019188056 discloses a lead acid storage battery which is provided with: an electrode plate group which comprises a negative electrode plate, a positive electrode plate and a separator that is interposed between the negative electrode plate and the positive electrode plate; and an electrolyte solution wherein the distance D between the positive electrode plate and the negative electrode plate and the maximum thickness T of the separator satisfy relational expression -0.1 mm ≤ (D - T) ≤ 0.1 mm. JP 2020 174058 A provides a liquid lead-acid battery and a manufacturing method thereof which can sufficiently suppress a decrease in an electrolytic solution due to overcharging without including a specific element in an active material or an electrolytic solution.

### PRIOR ART DOCUMENTS

### PATENT DOCUMENTS

Patent Document 1: JP-A-2021-5574
Patent Document 2: JP-A-2015-22921
Patent Document 3: JP-A-2-94257
Patent Document 4: JP-A-2014-197546

### SUMMARY OF THE INVENTION

### PROBLEMS TO BE SOLVED BY THE INVENTION

The lead-acid battery is sometimes used in a poor charged state called a partial state of charge (PSOC). For example, in an idling stop (also referred to as start-stop or idle reduction) application, the lead-acid battery is used in PSOC. When the lead-acid battery is used in PSOC, stratification easily proceeds in which a specific gravity of an electrolyte solution in an upper part of the battery gradually decreases and the specific gravity of the electrolyte solution in a lower part of the battery gradually increases. As the stratification proceeds, lead sulfate remarkably accumulates in a lower part of the negative electrode plate, and sulfation in which crystals of lead sulfate are generated is likely to occur. As a result, the capacity is reduced, and the plate is deteriorated due to an uneven charge-discharge reaction, so that the life of the lead-acid battery is shortened. In the present specification, the idling stop may be simply referred to as IS. Examples of the IS application include an idle reduction system vehicle.

In the lead-acid battery, during charge, hydrogen gas is generated from the negative electrode plate, and oxygen gas is generated from the positive electrode plate. By stirring the electrolyte solution by the generated gas, the stratification can be suppressed to some extent. However, when the gas comes into contact with the softened positive electrode material, the positive electrode material is likely to fall off. In particular, when charge and discharge with a deep depth of discharge are repeated in the lead-acid battery, the softening and falling-off of the positive electrode plate become remarkable. The falling-off positive electrode material is stirred up by the gas generated during charge and deposited on the upper part of the element, so that a short circuit may occur between the positive electrode and the negative electrode, leading to a short life. Such a short circuit is referred to as a moss short circuit.

As described above, in the lead-acid battery, it is difficult to achieve both life performance in PSOC (hereinafter, referred to as PSOC life performance) and life performance when charge and discharge with a deep depth of discharge are repeated (hereinafter, referred to as deep discharge life performance).

### MEANS FOR SOLVING THE PROBLEMS

One aspect of the present disclosure is a lead-acid battery including: at least one element; an electrolyte solution; and a cell chamber housing the element and the electrolyte solution,
wherein the element includes a positive electrode plate, a negative electrode plate, and a bag-shaped separator interposed between the positive electrode plate and the negative electrode plate,
the separator includes a base part and a plurality of ribs protruding from the base part toward the positive electrode plate and extending along a longitudinal direction, and accommodates the positive electrode plate, wherein the longitudinal direction of the separator is a direction along the height direction of the plate in a state where the lead-acid battery housing the separator is placed in a normally used state,
a surface roughness of each of the positive electrode plate and the negative electrode plate is 0.4 mm or less,
a difference (= D - T) between a distance D between the positive electrode plate and the negative electrode plate and a maximum thickness T of the separator is 0 mm or less, and
an average value Mc of cross-sectional areas of spaces formed between the ribs adjacent to each other between the positive electrode plate and the separator in a direction parallel to a horizontal direction is 2.2 mm² or more and 7.2 mm² or less.

### ADVANTAGES OF THE INVENTION

In the lead-acid battery, excellent PSOC life performance and excellent deep discharge life performance can be secured.

### BRIEF DESCRIPTION OF THE DRAWINGS

Fig. 1 is a partially cutaway exploded perspective view showing an appearance and an internal structure of a lead-acid battery according to one aspect of the present invention.
Fig. 2 is a conceptual view of a negative electrode plate for describing a method for measuring the surface roughness of the negative electrode plate.

### MODE FOR CARRYING OUT THE INVENTION

A lead-acid battery according to one aspect of the present invention includes at least one element, an electrolyte solution, and a cell chamber housing the element and the electrolyte solution. The element includes a positive electrode plate, a negative electrode plate, and a bag-shaped separator interposed between the positive electrode plate and the negative electrode plate. Here, the lead-acid battery satisfies the following conditions (a) to (d).
(a) The separator includes a base part and a plurality of ribs protruding from the base part toward the positive electrode plate and extending along a longitudinal direction, and accommodates the positive electrode plate.
(b) A surface roughness of each of the positive electrode plate and the negative electrode plate is 0.4 mm or less.
(c) A difference (= D - T) between a distance D (unit: mm) between the positive electrode plate and the negative electrode plate and a maximum thickness T (unit: mm) of the separator is 0 mm or less.
(d) An average value Mc of cross-sectional areas of spaces formed between the ribs adjacent to each other between the positive electrode plate and the separator in a direction parallel to a horizontal direction is 2.2 mm² or more and 7.2 mm² or less. In the present specification, the rib in the above (a) is referred to as a first rib. The first rib is formed at least on a portion of the separator facing a positive electrode material.

According to the above (a) to (c), the top part of the first rib of the bag-shaped separator comes into contact with the positive electrode plate. Between the bag-shaped separator and the positive electrode plate, a space surrounded by the surface of the base part of the separator, side surfaces of the adjacent first ribs facing each other, a surface of the positive electrode plate facing the separator, and a bottom part of the bag-shaped separator is formed between the adjacent first ribs of the separator. Although the upper side of this space is opened, the space is referred to as a rib inner closed space for convenience. By setting the average value Mc of cross-sectional areas of the rib inner closed spaces in a direction parallel to a horizontal direction to a specific range as in the (d), excellent PSOC life performance is obtained. This is presumed to be due to the following reason. First, when the average value Mc of cross-sectional areas of the rib inner closed spaces is 7.2 mm² or less, the flow of the electrolyte solution flowing from bottom to top in the rib inner closed spaces along with the convection of the electrolyte solution during discharge is accelerated. In addition, when the average value Mc of cross-sectional areas of the rib inner closed spaces is 2.2 mm² or more, a phenomenon in which gas generated during charge stays in the rib inner closed spaces (hereinafter, referred to as "gas stagnation") is reduced, and a sufficient effect of suppressing stratification during charge is obtained, so that high PSOC life performance is obtained.

By setting the average value Mc of cross-sectional areas of the rib inner closed spaces to a specific range as in the above (d), excellent deep discharge life performance is obtained. This is presumed to be due to the following reason. According to the above (b), the gas generated during charge easily escapes upward, so that the gas hardly comes into contact with the surface of the positive electrode plate, or even if the gas comes into contact with the surface of the positive electrode plate, a local stress is hardly applied. Therefore, the falling-off of the softened positive electrode material is suppressed. In addition, since the average value Mc of cross-sectional areas of the rib inner closed spaces is as relatively small as 7.2 mm² or less, the falling-off positive electrode material is hardly stirred up to the upper part of the element. As a result, the occurrence of the moss short circuit is suppressed, so that high deep discharge life performance is obtained.

Meanwhile, when the average value Mc of cross-sectional areas in the above (d) is more than 7.2 mm², a large effect of improving both the PSOC life performance and the deep discharge life performance is not obtained even if (a) to (c) are satisfied. In the case of Mc ≤ 7.2 mm² in (d), the PSOC life performance and the deep discharge life performance are significantly improved as compared with the case of Mc > 7.2 mm², and thus the case of Mc ≤ 7.2 mm² can be said to have criticality. When the average value Mc of cross-sectional areas in (d) is less than 2.2 mm², the deep discharge life performance is high, but the effect of improving the PSOC life performance is small. In the case of Mc ≥ 2.2 mm², the PSOC life performance is remarkably improved as compared with the case of Mc < 2.2 mm², and thus the case of Mc ≥ 2.2 mm² can be said to have criticality. Even when (b) to (d) are satisfied, both the PSOC life performance and the deep discharge life performance are greatly deteriorated as compared with the conventional case when the bag-shaped separator accommodates the negative electrode plate. As described above, in one aspect of the present invention, by satisfying all of (a) to (d), both excellent PSOC life performance and excellent deep discharge life performance can be secured.

In the above (a), the base part of the separator is a portion of the constituent part of the separator excluding protrusions such as ribs, and refers to a sheet-like portion that defines the outer shape of the separator.

The longitudinal direction of the separator is a direction along the height direction of the plate (or the vertical direction in the lead-acid battery) in a state where the lead-acid battery housing the separator is placed in a normally used state. An acute angle formed by an average direction in which the first rib extends and the height direction of the plate (or the vertical direction in the lead-acid battery) is, for example, 30° or less, and may be 15° or less. The average direction in which the first rib extends and the height direction of the plate (or the vertical direction in the lead-acid battery) may be parallel to each other.

The surface roughness of the plate in (b) is an average value of maximum height roughnesses Rz of 18 points measured at each of 9 divided points for each of both main surfaces of the plate. The maximum height roughness Rz refers to a difference (Rv + Rp) from a mostly depressed portion (maximum valley depth Rv) to a mostly protruding portion (maximum peak height Rp) of the main surface.

With regard to D - T in the above (c), the distance D between the positive electrode plate and the negative electrode plate (hereinafter, may be referred to as an inter-electrode distance D) and the maximum thickness T of the separator are described as follows.

### (Inter-electrode distance D)

The inter-electrode distance D is represented by the following formula. 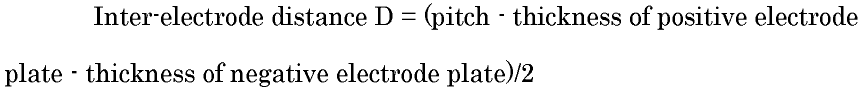 Inter-electrode distance D = (pitch - thickness of positive electrode plate - thickness of negative electrode plate)/2

Here, the pitch is an average value of distances between the centers of lug parts of a pair of adjacent positive electrode plates. More specifically, the pitch is the average value of the distances between the centers of the lug parts obtained for all the pairs of adjacent positive electrode plates included in the element. The thickness of the positive electrode plate is an average value of the thicknesses of all the positive electrode plates included in the element, and the thickness of the negative electrode plate is an average value of the thicknesses of all the negative electrode plates included in the element. In a lead-acid battery including a plurality of elements, each of a pitch, a thickness of a positive electrode plate, and a thickness of a negative electrode plate is an average value in one element located at the end part and one element located near the center.

### (Maximum thickness T of separator)

The maximum thickness T of the separator is an average value of the maximum thicknesses t of all the separators included in the element. In the lead-acid battery including the plurality of elements, the maximum thickness T of the separator is an average value of the maximum thickness t of each separator in one element located at the end part and the maximum thickness t of each separator in one element located near the center.

With respect to the average value Mc of cross-sectional areas of the rib inner closed spaces in the above (d), the cross-sectional areas of the rib inner closed spaces are determined by measuring the interval between the first ribs and the height of the first rib of the separator extracted from the lead-acid battery and multiplying these. For a plurality of (for example, 10) separators taken out from the lead-acid battery, products of the intervals between the first ribs in the rib inner closed spaces and the heights of the first ribs are determined and averaged to determine the average value Mc. In one separator, when the intervals between the first ribs are different, an average value of the intervals between the first ribs is determined, and the product of the average value and the height of the first rib is taken as the cross-sectional area of the rib inner closed space. The interval between the first ribs is a distance between the opposing side walls of the adjacent first ribs (more specifically, the shortest distance). The height of the first rib is determined by measuring the total thickness of the separator (corresponding to the total of the height of the rib and the thickness of the base part) and the thickness of the base part, and subtracting the thickness of the base part from the total thickness of the separator. When the separator includes a rib on the main surface opposite to the main surface including the first rib, the height of the first rib is determined by measuring the total thickness of the height of the rib and the base part and subtracting the measured value from the total thickness of the separator.

The average value Mc of cross-sectional areas of the rib inner closed spaces may be 3.9 mm² or more. In this case, it is easier to further suppress gas stagnation in the rib inner closed space.

The average value of the intervals between the adjacent first ribs may be 4 mm or more or 5 mm or more. In this case, it is easy to adjust the average value Mc to the above range. Since the gas stagnation is hardly caused in the rib inner closed space, the effect of suppressing the stratification is further enhanced.

The average value of the intervals between the adjacent first ribs may be 13 mm or less. In this case, it is easy to adjust the average value Mc to the above range. Higher PSOC life performance and deep discharge life performance are easily obtained.

In the same manner as in the above average value Mc, the average value of the intervals between the first ribs is determined by measuring and averaging the intervals between the adjacent first ribs (more specifically, the distance (shortest distance) between the opposing side walls of the adjacent first ribs) for a plurality of (for example, 10) separators taken out from the lead-acid battery.

In a cross section parallel to a bottom part of the cell chamber of the lead-acid battery and passing through a position 5 cm in height from the bottom part of the cell chamber, a ratio Ra (= Se/Sg) of a cross-sectional area Se of the electrolyte solution present between an outer edge of the element and an inner edge of the cell chamber housing the element to a cross-sectional area Sg of the element may be 0.27 or less. In other words, the wall surface (side wall or partition) of the cell chamber is close to the periphery of the element, and a volume in which the electrolyte solution can be retained is limited. Since the volume occupied by the electrolyte solution is relatively small outside the element, the downward convection of the electrolyte solution generated during discharge is easily blocked. Therefore, the effect of suppressing the stratification can be further enhanced. The ratio Ra may be 0.26 or less. In this case, the PSOC life performance and the deep discharge life performance can be further enhanced. This is considered to be because the effect of suppressing the stratification is further enhanced, and the effect of reducing the occurrence of the moss short circuit is enhanced.

The ratio Rb (= Ss/Se × 100) of the total Ss of the cross-sectional areas occupied by the electrolyte solution to the cross-sectional area Se may be 80% or more in a portion located between each of the outer edges of the element at both side end parts of the element and the inner edge of the cell chamber facing each of the outer edges. When attention is paid to one cell chamber, in the case of (D - T) ≤ 0 mm in the above (c), the interval between each of the outer edges of the element at both end parts in the stacking direction of the plates and the separator in the element and the inner edge of the cell chamber facing each of the outer edges is often relatively small, and the influence on the stratification is relatively small. Meanwhile, when the interval between each of the outer edges of the element at both side end parts of the element and the inner wall of the cell chamber facing each of the outer edges is large, the influence on the stratification increases. When the ratio of the total cross-sectional area Ss of the electrolyte solution in this portion to the cross-sectional area Se is as large as 80% or more, the downward convection tends to occur during discharge, and the stratification tends to occur. However, in such a case, in addition to the above (a) to (d), when the ratio Ra = Se/Sg is 0.27 or less (or 0.26 or less), high deep discharge life performance is obtained, the downward convection is suppressed, and the stratification is suppressed, so that high PSOC life performance is obtained.

In the present specification, the up-down direction of the lead-acid battery or constituent elements (such as plate, container, and separator) of the lead-acid battery means the up-down direction of the lead-acid battery in the vertical direction when the lead-acid battery is in use. Each of the positive electrode plate and the negative electrode plate includes a lug part for connecting to an external terminal. In a horizontal valve regulated lead-acid battery or the like, the lug part may be provided at a side part of the plate so as to protrude laterally; however, in many lead-acid batteries, the lug part is usually provided at an upper part of the plate so as to protrude upward.

The element usually includes a plurality of positive electrode plates, a plurality of negative electrode plates, and separators with each separator being interposed between the positive electrode plate and the negative electrode plate. The positive electrode plate and the negative electrode plate are alternately stacked with the separator interposed therebetween. The width direction (hereinafter, referred to as an "x direction") of the element is a direction orthogonal to the stacking direction (hereinafter, referred to as a "y direction") of the positive electrode plate, the negative electrode plate, and the separator, and orthogonal to the up-down direction (vertical direction). The up-down direction (vertical direction) is defined as a z direction.

The cell chambers are usually formed by dividing a space in a container of a lead-acid battery into a plurality of parts by partitions. For example, the inside of the container may be divided into a plurality of (for example, 6) spaces by partitions parallel to each other. For example, the dimension of the plurality of spaces (cell chambers) in the x direction (the width direction of the element) is larger than the dimension of the element in the y direction (stacking direction). When the lead-acid battery includes one element, the container does not need to be divided into a plurality of cell chambers, and the element and the electrolyte solution may be housed in the container. In this case, the "cell chamber" may be used in the same meaning as that of the container. The container includes a bottom part, a side wall rising from a peripheral edge of the bottom part along a vertical direction, and an opening part formed at the end part of the side wall on a side opposite to the bottom part. The lead-acid battery usually includes such a container and a lid body that closes the opening part of the container. Each element, or each element and a cell chamber housing the element may be referred to as a cell.

The dimensions of the element in the x direction and the z direction are regulated by the dimension (x) of a portion of the element other than the lug part in the x direction and the dimension of the portion in the z direction. The x direction of the element and the x direction of the negative electrode plate are the same direction, and the z direction of the element and the z direction of the plate are the same direction. The y direction of the element is parallel to the thickness direction of the element. When the dimension in the x direction or the dimension in the z direction is different between the negative electrode plate and the positive electrode plate, the dimensions of the element in the x direction and the z direction are regulated by the average value of the dimensions of the negative electrode plate and the positive electrode plate in the respective directions. In the cross section parallel to the bottom part of the cell chamber of the lead-acid battery and passing through a position 5 cm in height from the bottom part, the dimension of the element in the y direction corresponds to an interval (y) between the outermost surfaces in the stacking direction of two members (positive electrode plate, negative electrode plate, or separator) disposed on the outermost side in the stacking direction. The cross-sectional area Sg of the element is represented by x × y.

In the cross section parallel to the bottom part of the cell chamber of the lead-acid battery and passing through a position 5 cm in height from the bottom part, the cross-sectional area Se of the electrolyte solution present between the outer edge of the element and the inner edge of the cell chamber housing the element is a value obtained by subtracting a cross-sectional area (Sg = x × y) of the element from an area of a region surrounded by the inner edge of the cell chamber (cross-sectional area (S1) of the cell chamber housing the element). The cross-sectional area Se is represented by S1 - (x × y). The cross-sectional area S1 is determined by subtracting the cross-sectional area of a portion other than the element and the electrolyte solution (for example, other member such as a spacer, and a hollow part (such as a space not filled with electrolyte solution)). That is, the ratio Ra is represented by Se/Sg = (S1 - x × y)/(x × y).

When attention is paid to one cell chamber, in the cross section parallel to the bottom part of the cell chamber and passing through a position 5 cm in height from the bottom part, the total of cross-sectional areas of portions located between each of the outer edges of the element at both side end parts of the element (in other words, both end parts of the element in the x axis direction) and the inner edge of the cell chamber facing each of the outer edges is defined as S2. Each of these portions is hereinafter referred to as the outer portion of the side end part of the element. The cross-sectional area S2 is a value determined by subtracting the cross-sectional area of a portion other than the electrolyte solution. The total Ss of the cross-sectional areas occupied by the electrolyte solution is represented by y × S2. That is, the ratio Rb is represented by Ss/Se × 100 (%).

When the lead-acid battery includes a plurality of cells, each of the ratio Ra and the ratio Rb is an average value determined for the cell located at the end part and the cell located near the center.

The lead-acid battery according to one aspect of the present invention is suitable for a flooded-type (vent type) lead-acid battery.

In the present specification, each of the surface roughness of the positive electrode plate and the negative electrode plate, (D - T), the average value Mc of the cross-sectional areas of the first rib inner closed spaces, the average value of the intervals between the first ribs, the ratio Ra, and the ratio Rb is determined for the lead-acid battery in a full charge state, the element taken out from the lead-acid battery, the positive electrode plate and the negative electrode plate in the element, the separator taken out from the lead-acid battery in a full charge state, or the cell chamber (or container) after taking out the element and the electrolyte solution.

In the present specification, the full charge state of the flooded-type lead-acid battery is defined by the definition of JIS D 5301: 2019. More specifically, the following state is defined as the full charge state: the lead-acid battery is charged in a water bath at 25°C ± 2°C at a current (A) 0.2 times as large as a numerical value (numerical value whose unit is Ah) described as a rated capacity until a terminal voltage (V) during charge measured every 15 minutes or an electrolyte solution density subjected to temperature correction to 20°C exhibits a constant value at three significant digits continuously three times.

In the present specification, the lead-acid battery in a full charge state is a lead-acid battery obtained by fully charging a formed lead-acid battery. The full charge of the lead-acid battery may be performed immediately after formation so long as being performed after formation or may be performed after the lapse of time from formation (for example, a lead-acid battery in use (preferably at the initial stage of use) after formation may be fully charged). The battery at the initial stage of use refers to a battery that has not been used for a long time after the start of use and has hardly deteriorated.

Hereinafter, the lead-acid battery according to an embodiment of the present invention will be described for each of the main constituent elements. However, the present invention is not limited only to the following embodiment.

### [Lead-acid battery]

The lead-acid battery includes at least one element, an electrolyte solution, and a cell chamber that houses the element and the electrolyte solution. The element includes a negative electrode plate, a positive electrode plate, and a bag-shaped separator interposed therebetween.

### (Negative electrode plate)

The surface roughness (Rz) of the negative electrode plate is 0.4 mm or less, and may be 0.25 mm or less or 0.15 mm or less. Since Rz of the negative electrode plate is as small as described above, a first rib inner closed space is easily formed. Therefore, the stratification and the falling-off of the positive electrode material are easily suppressed. Rz is, for example, 0 mm or more.

When the element includes a plurality of negative electrode plates, the average value of surface roughnesses determined for all the negative electrode plates may be in the above-mentioned range of Rz. For each of the negative electrode plates included in the element, the surface roughness is preferably in the above-mentioned range of Rz. When the lead-acid battery includes a plurality of elements, the surface roughness Rz of the negative electrode plate is determined for the element located at the end of the lead-acid battery and the element located near the center.

The thickness of the negative electrode plate is adjusted such that performance and capacity and the like required for the lead-acid battery are obtained, and (D - T) ≤ 0 mm is set.

The negative electrode plate contains, for example, a negative electrode current collector and a negative electrode material.

The negative current collector may be formed by casting lead (Pb) or a lead alloy, or may be formed by processing a lead sheet or a lead alloy sheet. Examples of the processing method include expanding processing or punching processing. It is preferable to use the grid-like current collector as the negative current collector because the negative electrode material is easy to support.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative current collector may include a surface layer. The surface layer and the inner layer of the negative current collector may have different compositions. The surface layer may be formed in a part of the negative current collector. The surface layer may be formed, for example, only on the grid portion, only on the lug portion, or only on the frame rib portion of the negative current collector.

The negative electrode material contains a negative active material (lead or lead sulfate) that exhibits a capacity through a redox reaction. The negative electrode material may contain an additive as necessary. The additive is preferably an organic expander, a carbonaceous material, and barium sulfate and the like. The negative electrode material may contain other additives (for example, a reinforcing material (resin fiber or the like)) in addition to these additives.

Examples of the organic expander include a lignin compound and a synthetic organic expander. Examples of the lignin compound include lignin and lignin derivatives (for example, lignin sulfonic acid or salts thereof (such as alkali metal salts (sodium salts and the like)). However, the organic expander is not limited to these specific examples. The negative electrode material may contain one kind or two or more kinds of organic expanders.

The content of the organic expander in the negative electrode material is, for example, 0.01% by mass or more. The content of the organic expander is, for example, 1.0% by mass or less and may be 0.5% by mass or less.

Examples of the carbonaceous material include carbon black, graphite (such as artificial graphite and natural graphite), hard carbon, and soft carbon. The negative electrode material may contain one kind or two or more kinds of carbonaceous materials.

The content of the carbonaceous material in the negative electrode material is, for example, 0.05% by mass or more and may be 0.1 % by mass or more. The content of the carbonaceous material may be, for example, 5% by mass or less.

The content of barium sulfate in the negative electrode material is, for example, 0.05% by mass or more and may be 0.10% by mass or more. The content of barium sulfate is, for example, 3% by mass or less.

### (Others)

An unformed negative electrode plate is prepared, for example, by applying or filling a negative electrode paste to or in a negative current collector, followed by curing and drying. The negative active material in a charge state is spongy lead, but the unformed negative electrode plate is usually prepared using a lead powder. More specifically, the negative electrode paste used for preparing an unformed negative electrode plate is prepared, for example, by adding water and sulfuric acid (or aqueous sulfuric acid solution) to a lead powder and, as necessary, various additives (organic expander and carbonaceous material and the like), followed by mixing. At the time of curing, it is preferable to cure the unformed negative electrode plate at a higher temperature than room temperature and high humidity. The negative electrode plate is prepared by, for example, forming the unformed negative electrode plate.

The surface roughness Rz of the negative electrode plate can be adjusted, for example, by pressing the negative electrode paste applied to the negative current collector against the negative current collector with a jig. For example, the jig that presses the negative electrode paste has a smooth (no or small unevenness) surface as a pressing surface. The surface roughness (Rz) of the pressing surface may be in the range described for the surface roughness Rz of the negative electrode plate. However, the surface roughness of the negative electrode plate is not limited to such a method, and may be adjusted, for example, by polishing the surface of the unformed negative electrode plate after curing. The surface roughness may be adjusted by devising a device in a manufacturing process.

When the plate is manufactured, a roller or a pressing device may be used to fill the paste in the current collector. In this case, the surface of a roller or a pressing device used when the paste is filled in the current collector is generally subjected to embossing in order to facilitate handling and to make process troubles less likely to occur.

In such a case, unevenness is formed in the surface of the plate in the manufacturing process. Therefore, it is necessary to take special measures so as not to leave traces in the surface of the plate in the manufacturing process, and when such measures are not taken, the surface roughness Rz of the plate is about 5 mm when the plate is normally manufactured.

When the surface roughness Rz of the plate is adjusted by devising the manufacturing process, the surface roughness Rz of the plate can be adjusted by making a roller surface used for roll pressing flat (by attaching a flat sheet to a roller or replacing the roller with a flat roller) or making a pressing surface of a pressing machine flat (by attaching a flat sheet or the like or replacing the pressing surface with a flat jig).

The formation may be performed, for example, by housing the element including the unformed negative electrode plate and the electrolyte solution containing sulfuric acid in the container of the lead-acid battery and charging the element in a state where the electrolyte solution is soaked into the element. However, the formation may be performed before the lead-acid battery or the element is assembled. The formation produces spongy lead.

### (Analysis or measurement of negative electrode plate or negative electrode material)

The analysis or measurement of the negative electrode plate or the negative electrode material is performed using the negative electrode plate taken out from the lead-acid battery in a full charge state.

### (1) Measurement of surface roughness of negative electrode plate

The surface roughness of the negative electrode plate taken out from the lead-acid battery in a full charge state is measured. The measurement is performed by the following procedures.

First, the lead-acid battery in a full charge state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 50 ± 5°C in a reduced pressure environment for about 24 hours. Thus, a sample (hereinafter, referred to as a sample A) for measuring the surface roughness is prepared. When the negative electrode plate includes a sticking member after drying, the negative electrode plate is subjected to the measurement of the surface roughness without removing the sticking member.

Each of both main surfaces of the sample A is divided into nine, and maximum height roughnesses Rz are measured at predetermined points of each divided region using a microscope. An average value obtained by averaging the maximum height roughnesses Rz of a total of 18 points is defined as the surface roughness (Rz) of the negative electrode plate. As the microscope, VK-X100 series manufactured by KEYENCE CORPORATION is used.

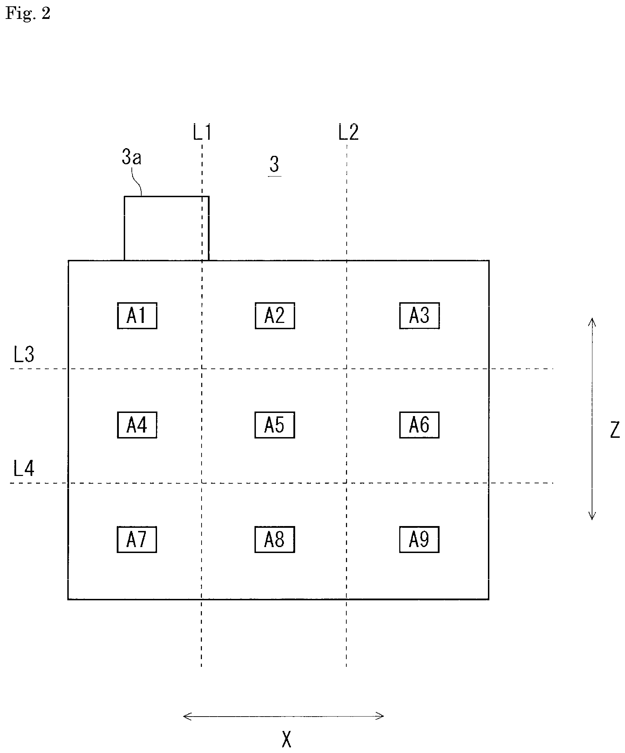

Hereinafter, the calculation of the surface roughness Rz of the negative electrode plate will be described more specifically with reference to the drawings. Note that Fig. 2 described below is a conceptual view exemplarily illustrated to describe the calculation of the surface roughness. Fig. 2 does not correspond to a specific embodiment of the present invention, and description after Fig. 2 is not limited only to Fig. 2.

As shown in Fig. 2, a portion of the negative electrode plate 3 excluding the lug part has a substantially quadrangular shape. A portion of the negative electrode plate 3 containing a negative electrode material is divided into three equal parts by straight lines L1 and L2 along the x direction of the negative electrode plate 3, and divided into three equal parts by straight lines L3 and L4 along the y direction, so as to be divided into nine sections of three rows × three columns of approximately the same size. The maximum height roughness Rz is measured with a microscope in rectangular areas (short side is parallel to L1 and L2, and long side is parallel to L3 and L4) A1 to A9 of 5 mm ×7.5 mm at the center of each section. As described above, the maximum height roughness Rz is a difference (Rv + Rp) from the maximum valley depth Rv to the maximum peak height Rp. The surface roughness of the negative electrode plate is determined as the average value of 18 maximum height roughnesses Rz measured for both main surfaces of A1 to A9.

### (2) Analysis of constituent components in negative electrode material

In the same manner as in the above (1), a negative electrode plate obtained from a lead-acid battery in a full charge state is washed with water and dried. When the negative electrode plate includes a sticking member after drying, the sticking member is removed, and then a negative electrode material is separated from the negative electrode plate to obtain a sample (hereinafter, referred to as a sample B). The sample B is ground as necessary and subjected to analysis.

### (2-1) Quantitative determination of organic expander

The ground sample B is immersed in a 1 mol/L NaOH aqueous solution to extract an organic expander. Insoluble components are removed from the NaOH aqueous solution containing the extracted organic expander by filtration, and a filtrate (hereinafter, also referred to as a filtrate C) is recovered.

A predetermined amount of the filtrate C is weighed, desalted, then concentrated, and dried to obtain a powder of the organic expander (hereinafter, also referred to as a sample D). The desalination is performed by using a desalination column, by causing the filtrate C to pass through an ion-exchange membrane, or by placing the filtrate C in a dialysis tube and immersing the filtrate C in distilled water.

The organic expander is specified by combining information obtained from an infrared spectral spectrum of the sample D, an ultraviolet-visible absorption spectrum of a solution obtained by dissolving sample D in distilled water or the like, a nuclear magnetic resonance (NMR) spectrum of a solution obtained by dissolving the sample D in a solvent such as heavy water, or a pyrolysis GC-MS capable of obtaining information on individual compounds constituting the substance, or the like.

The ultraviolet-visible absorption spectrum of the filtrate C is measured. The content of the organic expander in the negative electrode material is determined quantitatively from a spectral intensity, a calibration curve prepared in advance, the amount of the filtrate C weighed, and the mass of the sample B. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

### (2-2) Quantitative determination of carbonaceous material and barium sulfate

To 10 g of the ground sample B, 50 ml of nitric acid having a concentration of 20% by mass is added, followed by heating for about 20 minutes to dissolve the lead component as lead ions. Next, the resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of the carbonaceous material and barium sulfate. By subtracting the mass of the membrane filter from the total mass of the dried mixed sample (hereinafter, referred to as a sample E) and the membrane filter, a mass (Mₘ) of the sample E is measured. Thereafter, the sample E is placed in a crucible together with the membrane filter and is burned and incinerated at 1300°C or higher. The residue remaining is barium oxide. The mass of barium sulfate (M_{B}) is determined by converting the mass of barium oxide to the mass of barium sulfate. The mass of the carbonaceous material is calculated by subtracting the mass M_{B} from the mass Mₘ. The ratios (percentages) of the obtained mass of barium sulfate and the mass of the carbonaceous material to the mass of the sample B are determined. Thus, the content of barium sulfate and the content of the carbonaceous material in the negative electrode material are determined.

### (3) Thickness of negative electrode plate

The element is taken out from the lead-acid battery in a full charge state, and all the negative electrode plates are taken out from the element. The thicknesses of all the negative electrode plates included in the element are measured with a caliper and averaged to determine the thickness of the negative electrode plate. The determined thickness of the negative electrode plate is used for calculating the inter-electrode distance D. In a lead-acid battery including a plurality of elements, the thickness (average value) of the negative electrode plate is determined by determining and averaging the thicknesses of the negative electrode plate in one element located at the end part and one element located near the center.

### (Positive electrode plate)

The surface roughness (Rz) of the positive electrode plate is 0.4 mm or less, and may be 0.25 mm or less or 0.15 mm or less. When Rz of the positive electrode plate is as small as described above, the gas generated during charge easily escapes upward, and hardly comes into contact with the surface of the positive electrode plate. Even when the gas comes into contact with the surface of the positive electrode plate, the surface of the positive electrode plate is smooth, so that a local stress is hardly applied. The first rib inner closed space is easily formed. Therefore, the falling-off of the positive electrode material is suppressed, and excellent deep discharge life performance is easily obtained. Rz is, for example, 0 mm or more.

When the element includes a plurality of positive electrode plates, the average value of surface roughnesses determined for all the positive electrode plates may be in the above-mentioned range of Rz. For each of the positive electrode plates included in the element, the surface roughness is preferably in the above-mentioned range of Rz. When the lead-acid battery includes a plurality of elements, the surface roughness Rz of the positive electrode plate is determined for the element located at the end of the lead-acid battery and the element located near the center.

The thickness of the positive electrode plate and the pitch between the adjacent positive electrode plates are adjusted such that performance and capacity and the like required for the lead-acid battery are obtained, and (D - T) ≤ 0 mm is set.

In a normal battery, the value of (D - T) is about 0.05 to 0.2 mm.

As the positive electrode plate, for example, a paste-type positive electrode plate is used. The paste-type positive electrode plate includes a positive current collector and a positive electrode material.

The positive current collector may be formed, for example, in accordance with the case of the negative current collector. As the positive current collector, a grid-like positive current collector may be used.

The positive current collector may be made of pure lead. When the positive current collector is made of a lead alloy, examples of the lead alloy include a Pb-Ca-based alloy, a Pb-Sn-based alloy, and a Pb-Ca-Sn-based alloy. The lead alloy may further contain, as an additive element, at least one selected from the group consisting of Ba, Ag, Al, Bi, As, Se, Cu, and the like.

The positive current collector may include a surface layer. The surface layer and the inner layer of the positive current collector may have different compositions. The surface layer may be formed in a part of the positive current collector. The surface layer may be formed, for example, only on the grid portion, only on the lug portion, or only on the frame rib portion of the positive current collector.

The positive electrode material contains a positive active material (lead dioxide or lead sulfate) that exhibits a capacity through a redox reaction. The positive electrode material may contain an additive (reinforcing material (resin fiber or the like) or the like) as necessary.

### (Others)

An unformed paste-type positive electrode plate is obtained, for example, by applying or filling a positive electrode paste to or in a positive current collector, followed by curing and drying. The positive electrode paste is prepared by, for example, mixing a lead powder, an additive (such as a reinforcing material), water, and sulfuric acid. The positive electrode plate is obtained by forming the unformed positive electrode plate.

The surface roughness Rz of the positive electrode plate can be adjusted, for example, by pressing the positive electrode paste applied to the positive current collector against the positive current collector with a jig. For example, a jig that presses the positive electrode paste has a smooth (no or small unevenness) surface as a pressing surface. The surface roughness (Rz) of the pressing surface may be in the range described for the surface roughness Rz of the positive electrode plate. However, the surface roughness of the positive electrode plate may be adjusted, for example, by polishing the surface of the unformed positive electrode plate after curing without limitation to such a method. The surface roughness may be adjusted by devising a device in a manufacturing process.

When the plate is manufactured, a roller or a pressing device may be used to fill the paste in the current collector. In this case, the surface of a roller or a pressing device used when the paste is filled in the current collector is generally subjected to embossing in order to facilitate handling and to make process troubles less likely to occur.

In such a case, unevenness is formed in the surface of the plate in the manufacturing process. Therefore, it is necessary to take special measures so as not to leave traces in the surface of the plate in the manufacturing process, and when such measures are not taken, the surface roughness Rz of the plate is about 5 mm when the plate is normally manufactured.

When the surface roughness Rz of the plate is adjusted by devising the manufacturing process, the surface roughness Rz of the plate can be adjusted by making a roller surface used for roll pressing flat (by attaching a flat sheet to a roller or replacing the roller with a flat roller) or making a pressing surface of a pressing machine flat (by attaching a flat sheet or the like or replacing the pressing surface with a flat jig).

The formation of the unformed positive electrode plate may be performed, for example, by housing the element including the unformed positive electrode plate and the electrolyte solution containing sulfuric acid in the container of the lead-acid battery and charging the element in the state where the electrolyte solution is soaked into the element. However, the formation may be performed before the lead-acid battery or the element is assembled.

### (Measurement of positive electrode plate)

### (1) Measurement of surface roughness of positive electrode plate

The surface roughness of the positive electrode plate taken out from the lead-acid battery in a full charge state is measured. The measurement is performed by the following procedures.

First, the lead-acid battery in a full charge state is disassembled to obtain the positive electrode plate to be analyzed. The obtained positive electrode plate is washed with water and dried to remove the electrolyte solution in the positive electrode plate. The washing with water is performed until it is confirmed that color of a pH test paper does not change by pressing the pH test paper against the surface of the positive electrode plate washed with water. The positive electrode plate washed with water is dried at 50 ± 5°C for about 24 hours. Thus, a sample (hereinafter, referred to as a sample F) for measuring the surface roughness is prepared. When the positive electrode plate includes a sticking member after drying, the positive electrode plate is subjected to the measurement of the surface roughness without removing the sticking member. The surface roughness of the positive electrode plate is determined in the same manner as in the negative electrode plate except that the sample F is used instead of the sample A.

### (2) Thickness of positive electrode plate

The thickness of the positive electrode plate is measured in accordance with the thickness of the negative electrode plate. The thicknesses of all the positive electrode plates included in the element are measured and averaged to determine the thickness of the positive electrode plate. The determined thickness of the positive electrode plate is used for calculating the inter-electrode distance D. In a lead-acid battery including a plurality of elements, the thickness (average value) of the positive electrode plate is determined by determining and averaging the thicknesses of the positive electrode plate in one element located at the end part and one element located near the center.

### (3) Pitch of positive electrode plates

With respect to the element taken out from the lead-acid battery in a full charge state, the lug parts of the plurality of positive electrode plates and straps connecting these lug parts in parallel are removed, washed with water, and dried. The dried product is impregnated with an epoxy resin and cured. The cured product is cut such that the cross section of the lug part of the element is exposed, and the cut surface is polished. The exposed cross section of the lug part is observed with a microscope, and the distance between the centers of the lug parts for the pair of the adjacent positive electrode plates is measured. The pitch of the positive electrode plates is **determined** by measuring and averaging the distances between the centers of the lug parts for all the pairs of adjacent positive electrode plates included in the element. In a lead-acid battery including a plurality of elements, the pitch is determined by measuring and averaging the pitches of the positive electrode plates in one element located at the end part and one element located near the center. The determined pitch of the positive electrode plates is used for calculating the inter-electrode distance D.

### (Separator)

As the separator, a bag-shaped separator is used. A positive electrode plate is accommodated in the bag-shaped separator.

The separator includes a base part and a plurality of ribs (first ribs) protruding from the base part toward the positive electrode plate and extending along a longitudinal direction. The separator may include a second rib protruding from the base part toward the negative electrode plate as necessary. The separator may not include the second rib. The main surface of the separator on a side facing the positive electrode plate may be referred to as a first main surface, and the main surface of the separator on a side facing the negative electrode plate may be referred to as a second main surface.

When (D - T) ≤ 0 mm is set, a rib inner closed space is formed between the first ribs adjacent to each other between the positive electrode plate and the separator. (D - T) may be -0.2 mm or more and 0 mm or less, or -0.1 mm or more and 0 mm or less.

The average value Mc of cross-sectional areas of the rib inner closed spaces is 2.2 mm² or more. When Mc is in such a range, gas stagnation in the rib inner closed space is suppressed, and convection from the top to the bottom outside the element is blocked. Since stratification is suppressed, high PSOC life performance is obtained. From the viewpoint of enhancing the effect of suppressing the gas stagnation, Mc is preferably 3.5 mm² or more or 3.9 mm² or more. Mc is 7.2 mm² or less. When Mc is in such a range, the flow of the electrolyte solution flowing from bottom to top in the rib inner closed space during discharge is accelerated. Since the stratification is suppressed, the high PSOC life performance is obtained. Since the stirring up of the falling-off positive electrode material is suppressed, the occurrence of the moss short circuit is suppressed, and high deep discharge life performance is obtained. From the viewpoint of easily securing higher PSOC life performance and higher deep discharge life performance, Mc may be 6.8 mm² or less or 6.6 mm² or less.

The average value Mc of cross-sectional areas of the rib inner closed spaces may be 2.2 mm² or more (or 3.5 mm² or more) and 7.2 mm² or less, 2.2 mm² or more (or 3.5 mm² or more) and 6.8 mm² or less, 2.2 mm² or more (or 3.5 mm² or more), 6.6 mm² or less, 3.9 mm² or more and 7.2 mm² or less (or 6.8 mm² or less), or 3.9 mm² or more and 6.6 mm² or less.

Only when the value of (D - T) or the surface roughness of the plate is special, the rib inner closed space is present, and therefore the closed space is not usually formed.

The average value of the intervals between the adjacent first ribs may be 4 mm or more, 5 mm or more, or 7 mm or more. In this case, it is easy to adjust Mc to the above range. Since the gas stagnation is hardly caused in the rib inner closed space, the effect of suppressing the stratification is further enhanced. The average value of the intervals between the adjacent first ribs may be 13 mm or less or 12 mm or less. In this case, it is easy to adjust the average value Mc to the above range. Higher PSOC life performance and deep discharge life performance are easily obtained.

The average value of the intervals between the adjacent first ribs may be 4 mm or more and 13 mm or less (or 12 mm or less), 5 mm or more and 13 mm or less (or 12 mm or less), or 7 mm or more and 13 mm or less (or 12 mm or less).

The average height of the first ribs is determined according to the intervals between the adjacent first ribs such that Mc is in the above range. The average height of the first ribs may be 0.3 mm or more or 0.4 mm or more. When the average height of the first ribs is in such a range, it is also possible to ensure the high oxidation degradation of the base part. From the viewpoint of securing a high capacity, the average height of the first ribs may be 1.0 mm or less or 0.7 mm or less.

When the separator includes the second rib, the second rib is formed in a region of the second main surface facing the negative electrode material. From the viewpoint of easily forming the rib inner closed space between the first ribs, the average height of the second ribs may be 0.1 mm or less. The average height of the second ribs may be, for example, 0.02 mm or more. The separator may include a plurality of second ribs. The average interval between the adjacent second ribs may be selected from the range described for the average interval between the first ribs.

The separator may include a rib (third rib) other than the first rib on the first main surface. The third rib is a rib formed in a region of the first main surface which does not face the positive electrode material. The separator may include a rib (fourth rib) formed in a region of the second main surface not facing the negative electrode material as necessary.

The average thickness of the base part is, for example, 0.1 mm or more, and may be 0.15 mm or more. When the average thickness of the base part is in such a range, the high strength of the separator is easily obtained. From the viewpoint of easily securing a higher capacity, the average thickness of the base part is, for example, 0.3 mm or less.

The maximum thickness T of the separator is, for example, 0.7 mm or more. The maximum thickness T of the separator is, for example, 0.95 mm or less.

As the separator, for example, a microporous membrane is used. The microporous membrane is a porous sheet mainly composed of components other than fiber components. The microporous membrane is obtained by, for example, extrusion molding a composition containing, for example, a pore-forming additive into a sheet shape and then removing the pore-forming additive to form pores.

The microporous membrane is preferably formed of a material having acid resistance, and is preferably a microporous membrane composed mainly of a polymer component. As the polymer component, a polyolefin (a polyethylene, a polypropylene, etc.) is preferable. Examples of the pore-forming additive include at least one selected from the group consisting of a polymer powder and oil.

The microporous membrane may have a single layer structure or a multilayer structure (or a stacked structure). In the separator having a multilayer structure, two adjacent layers may be engaged with each other by the unevenness of the interface.

The separator preferably includes at least a microporous membrane. The separator may be composed of, for example, only a microporous membrane or a layered product of a microporous membrane and a nonwoven fabric.

The nonwoven fabric is a mat in which fibers are intertwined without being woven and is mainly made of fibers. In the nonwoven fabric, for example, 60% by mass or more of the nonwoven fabric is formed of fibers. Examples of the fibers include glass fibers, polymer fibers (polyolefin fiber, acrylic fiber, polyester fiber (polyethylene terephthalate fiber, or the like), and the like), and pulp fibers. The nonwoven fabric may contain components other than the fibers (for example, an acid resistant inorganic powder and a polymer as a binder) and the like.

### (Measurement of size of separator)

A sample of the separator for measurement (hereinafter, also referred to as a sample G) is prepared by removing sulfuric acid from the separator taken out from the lead-acid battery in a full charge state by washing with water. The size of the separator is measured within 10 minutes from immediately after water washing in a state where the separator is wet with water.

### (1) Maximum thickness T of separator

The maximum thickness t of the sample G is measured with a caliper. The maximum thickness T is determined by measuring and averaging the maximum thicknesses t of all the separators included in the element. In the lead-acid battery including the plurality of elements, the maximum thickness T is determined by measuring and averaging the maximum thicknesses t of all the separators for one element located at the end part and the maximum thicknesses t of all the separators for one element located near the center.

When the thickness of the separator is different between a peripheral edge part of the separator and a portion inside the peripheral edge part, the maximum thickness t is measured for the portion inside the peripheral edge part. The thickness of the separator is a thickness including the base part and the rib. For example, when the ribs are formed on both surfaces of the separator, the thickness of the separator is the total of the thickness of the base part, the height of the rib of one main surface from the base part, and the height of the rib of the other main surface from the base part. The thickness of the separator at a portion having the largest value of the total is the maximum thickness t.

### (2) Total thickness of separator, average thickness of base part, average height of ribs, and average interval of ribs

The total thickness of the separator corresponds to the total of the thickness of the base part and the height of the rib. The total thickness of the separator is determined by measuring and averaging the total thicknesses of the sample G for a plurality of (for example, 10) separators extracted from the lead-acid battery using a caliper.

The thickness of the base part is determined by measuring and averaging the thicknesses of the base part of the sample G for a plurality of (for example, 10) separators extracted from the lead-acid battery using a caliper.

When the separator does not include the second rib, the height of the first rib is determined by subtracting the thickness of the base part from the total thickness of the separator measured as described above. When the separator includes the first rib and the second rib, the total of the thickness of the base part and the height of the second rib is measured with a caliper using the sample G. The height of the first rib is determined by subtracting the total of the thickness of the base part and the height of the second rib from the total thickness of the separator measured as described above. The height (average height) of the first ribs is determined by determining and averaging the heights of the first ribs for the sample G of a plurality of (for example, 10) separators taken out from the lead-acid battery. The average height of the second ribs is determined in a manner similar to that for the first ribs.

The average value of the intervals between the adjacent first ribs is determined by inserting a vernier caliper into the gaps between the adjacent first ribs, and measuring and averaging the intervals between the first ribs for the sample G of a plurality of (for example, 10) separators taken out from the lead-acid battery. The interval between the adjacent first ribs is a distance (more specifically, the shortest distance) between the opposing side walls of the adjacent first ribs. The interval between the second ribs is also determined according to the case of the interval between the first ribs.

For the sample G of a plurality of (for example, 10) separators taken out from the lead-acid battery, from the intervals between the first ribs and the heights of the first ribs determined by the above procedures, the products thereof are determined and averaged to determine the average value Mc of cross-sectional areas of the rib inner closed spaces.

### (Electrolyte solution)

The electrolyte solution is an aqueous solution containing sulfuric acid and may be gelled as necessary.

The electrolyte solution may contain cations (for example, metal cations) and/or anions (for example, anions other than sulfate anions (such as phosphate ions)) as necessary. Examples of the metal cation include at least one selected from the group consisting of an Al ion, a Na ion, a Li ion, and a Mg ion.

The specific gravity of the electrolyte solution in the lead-acid battery in a full charge state at 20°C is, for example, 1.20 or more and may be 1.25 or more. The specific gravity of the electrolyte solution at 20°C is, for example, 1.35 or less, and may be 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

### (Others)

The lead-acid battery may include one cell or two or more cells. When the lead-acid battery includes a plurality of cells (in other words, a plurality of elements), the plurality of elements may be connected in series.

The number of plates in the element may be one or two or more. From the viewpoint of securing a higher capacity, the number of negative electrode plates included in the element is preferably two or more, and may be four or more or six or more. When the number of negative electrode plates included in the element is m, the number of positive electrode plates is (m - 1) or more and (m + 1) or less when m ≥ 2 is set, and is 1 or 2 when m = 1 is set.

The inter-electrode distance D is adjusted such that (D - T) is in the above range. The inter-electrode distance D may be adjusted by, for example, the number of plates included in the cell, the thickness of each plate, the height of a wall surface rib formed at the end part of a cell chamber in the y direction or a convex part protruding into the cell chamber, and the thickness of a spacer disposed at the end part of the cell chamber in the y direction, and the like.

The ratio Ra (=Se/Sg) may be 0.27 or less. As a result, a high stratification suppressing effect can be obtained, and the PSOC life performance can be further enhanced. The ratio Ra may be 0.26 or less. When the ratio Ra is 0.26 or less, both the PSOC life performance and the deep discharge life performance are significantly improved as compared with the case of more than 0.26. From the viewpoint of reducing the stratification, the ratio Ra is, for example, 0.1 or more, and may be 0.13 or more or 0.15 or more.

The ratio Ra may be 0.1 or more and 0.27 or less (or 0.26 or less), 0.13 or more and 0.27 or less (or 0.26 or less), or 0.15 or more and 0.27 or less (or 0.26 or less).

The ratio Rb (= Ss/Se ×100) may be 80% or more or 85% or more. The ratio Rb is 100% or less, and may be less than 100% (for example, 99% or less). When the ratio Rb is in such a range, the above (a) to (d) are satisfied, and the ratio Ra is in the above range, both the deep discharge life performance and the PSOC life performance can be further enhanced.

The ratio Rb may be 80% or more (or 85% or more) and 100% or less, 80% or more (or 85% or more) and less than 100%, or 80% or more (or 85% or more) and 99% or less.

Each of the ratio Ra and the ratio Rb is determined in a portion parallel to the bottom part of the cell chamber (or container) of the lead-acid battery in a full charge state and at a height of 5 cm to 6 cm from the bottom part of the cell chamber.

More specifically, the ratio Ra is determined by the following procedures. First, the cross-sectional area S1 of the cell chamber (or container) is determined by the following procedures. After the element and the electrolyte solution are taken out from the container, the container is washed with water and dried, and then water is added to a position parallel to the bottom part of the container and at a height of 4.5 cm from the bottom part. Next, water is added to a position of a height of 5.5 cm from the bottom part, and the volume (cm³) of the added water is determined. The cross-sectional area S1 (cm²) of the container is determined by dividing the volume of the added water by the height of 1 cm. When the container is divided into a plurality of cells, the cross-sectional area S1 (cm²) of each cell chamber is determined by dividing the cross-sectional area (cm²) of all the cell chambers determined in the same manner as in the container by the number of the cell chambers. In the lead-acid battery, when a portion (for example, other member such as a spacer and a hollow portion (such as a space not filled with an electrolyte solution)) other than the element and the electrolyte solution is present in the container or the cell chamber, the cross-sectional area S1 of the container or the cell chamber is determined by the above procedures in a state where the portion is present.

The element taken out from the lead-acid battery in a full charge state is disassembled into a positive electrode plate, a negative electrode plate, and a separator, and the thickness of the positive electrode plate, the thickness of the negative electrode plate, and the total thickness of the separator are determined by the above-described procedures. At this time, each thickness at a position corresponding to a position 5 cm in height from the bottom part of the cell chamber (or container) is determined by a caliper. The thickness of the positive electrode plate × the number of the positive electrode plates, the thickness of the negative electrode plate × the number of the negative electrode plates, and the total thickness of the separator × the number of the separators present between the positive electrode plate and the negative electrode plate (in the case of a bag-shaped separator, the total thickness of the separator × the number of the bag-shaped separators × 2) are determined, and the determined values are summed. Accordingly, the thickness (dimension y) of the element in the stacking direction (y direction) is determined. Next, the width (dimension in the x direction) of the plate is measured on a scale. When the widths of the positive electrode plate and the negative electrode plate are different from each other, the average value of the widths is determined and taken as the width of the plate (dimension of the element in the x direction). The sectional area Sg of the element is determined by multiplying the width of the element by the thickness (dimension y) of the element in the stacking direction.

Se = S1 - Sg is determined from S1 and Sg. The ratio Ra is determined by dividing Se by Sg. In a lead-acid battery including a plurality of cells, the ratio Ra is determined by averaging the ratios Ra determined for a cell located at the end part and a cell located near the center.

The ratio Ra is about 0.3 in a normal battery.

The ratio Rb is determined by the following procedures. The internal dimension Lx of the cell chamber (or container) in a direction parallel to the x direction of the element is measured on a scale at a position 5 cm in height from the bottom part of the cell chamber or the container. When a wall surface rib or a convex part protruding into the cell chamber is present on the inner wall of the cell chamber in the outer portion of the side end part of the element in the cross-sectional image, the inner dimension Lx is measured except for these portions. The total value (S2) of the widths w1 and w2 of the outer portions (in other words, the interval between the outer edge of the side end part of the element and the inner edge of the cell chamber facing the outer edge portion) of both side end parts of the element is determined by subtracting the width (dimension in the x direction) of the plate determined above from Lx. Ss = y × (w1 + w2) = y × S2 is determined from the total value S2 and the dimension y of the element determined above in the y direction. A ratio Rb (%) is calculated from Rb = Ss/Se × 100. In a lead-acid battery including a plurality of cells, the ratio Rb is determined by averaging Rbs determined for the cell located at the end part and the cell located near the center.

The lead-acid battery can be obtained, for example, by a manufacturing method including a step of housing an element and an electrolyte solution in a cell chamber of a container. Each cell of the lead-acid battery includes the element and the electrolyte solution housed in each cell chamber. The element is assembled by, for example, stacking a positive electrode plate, a negative electrode plate, and a separator such that the separator is interposed between the positive electrode plate and the negative electrode plate prior to storage in the cell chamber. The positive electrode plate, the negative electrode plate, and the separator are usually each prepared prior to the assembly of the element. The electrolyte solution is prepared prior to storage in the cell chamber. When the lead-acid battery includes one element, the container does not need to be divided into a plurality of cell chambers, and the element and the electrolyte solution may be housed in the container.

A method for manufacturing the lead-acid battery may include a step of forming at least one of the positive electrode plate and the negative electrode plate as necessary after a step of housing the element and the electrolyte solution in the cell chamber.

### (Evaluation)

The PSOC life performance and the deep discharge life performance of the lead-acid battery are each evaluated by the following procedures.

### (1) PSOC life performance

In a water tank at 25°C ± 3°C, the following steps 1 to 7 are repeatedly performed until the life of the battery is determined to end. The combination of step 2 and step 3 is defined as one cycle, and the number of cycles until the life of the battery is determined to end is measured. When the end-of-discharge voltage reaches 1.67 V/cell or less in step 1 or step 3, the life of the battery is determined to end. The larger the number of cycles of the combination of step 2 and step 3, the more excellent the cycle life in PSOC. Note that I₂₀ is a 20 hour rate current (A), which is a current (A) 1/20 times a numerical value (numerical value in which the unit is Ah) described as a rated capacity.

Step 1: The battery is discharged at a constant current of 4 × I₂₀ (A) for 2.5 hours (depth of discharge (DOD) 17.5%).

Step 2: The battery is charged for 40 minutes under the conditions of a constant voltage of 2.4 V/cell and a maximum current of 7 × I₂₀ (A).

Step 3: The battery is discharged at a constant current of 4 × I₂₀ (A) for 30 minutes.

Step 4: The combination of step 2 and step 3 is repeated 85 times.

Step 5: The battery is charged for 18 hours under the conditions of a constant voltage of 2.67 V/cell and a maximum current of 2 × I₂₀ (A).

Step 6: The battery is discharged up to 1.75 V/cell at a constant current of 1× I₂₀ (A).

Step 7: The battery is charged for 24 hours under the conditions of a constant voltage of 2.67 V/cell and a maximum current of 5 × I₂₀ (A).

After step 7, the process returns to step 1.

### (2) Deep discharge life performance

A deep discharge cycle test is conducted at a depth of discharge of 50% (DOD 50%), and life performance is evaluated by a discharge end voltage.

Specifically, the following steps 1 to 4 are performed at 40°C ± 2°C using a lead-acid battery in a full charge state until the life of the battery is determined to end. At this time, the discharge end voltage in discharge at DOD 50% in each cycle is measured and monitored. When the voltage in discharge at DOD 50% reaches 1.67 V/cell, the life of the battery is determined to end. The life performance is evaluated on the basis of the number of cycles at the time when the life ends. The larger the number of cycles, the more excellent the life performance in the deep discharge cycle test. Note that I₂₀ is a 20 hour rate current (A), which is a current (A) 1/20 times a numerical value (numerical value in which the unit is Ah) described as a rated capacity.

Step 1: The battery is discharged at a constant current of 5 × I₂₀ (A) for 2 hours (DOD 50%).

Step 2: The battery is charged for 5 hours under the conditions of a constant voltage of 2.6 V/cell and a maximum current of 5 × I₂₀ (A). When the amount of charge reaches 108% of the discharge capacity in step 1, the process proceeds to step 4, and when the amount of charge does not reach 108% of the discharge capacity, the process proceeds to step 3.

Step 3: The battery is charged for 1 hour at a maximum under the conditions of a constant voltage of 3.0 V/cell and a maximum current of 1 × I₂₀ (A). When the total of the amounts of charge in step 2 and step 3 reaches 108% of the discharge capacity in step 1, the process proceeds to step 4.

Step 4: Steps 1 to 3 are repeated until the life ends.

The constituent elements described in the present specification are arbitrarily combined.

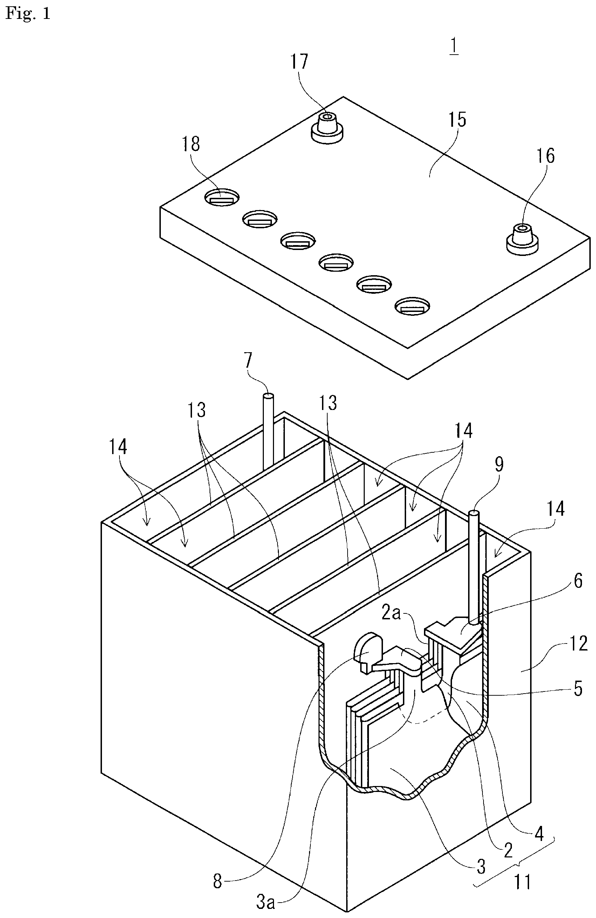

Fig. 1 shows an appearance of an example of a lead-acid battery according to an embodiment of the present invention.

A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 including a positive electrode terminal 16 and a negative electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is formed by alternately stacking each of a plurality of negative electrode plates 3 and each of a plurality of positive electrode plates 2 with a separator 4 interposed therebetween. The separator 4 has a bag shape, with one positive electrode plate 2 packaged in one separator 4. In the cell chamber 14 located at one end of the container 12, a positive electrode shelf 6 connecting lug parts 2a of a plurality of positive electrode plates 2 in parallel is connected to a penetrating connection body 8, and a negative electrode shelf 5 connecting lug parts 3a of a plurality of negative electrode plates 3 in parallel is connected to a negative pole 7. The negative pole 7 is connected to the negative electrode terminal 17 outside the lid 15. In the cell chamber 14 located at the other end part of the container 12, a positive pole 9 is connected to the positive electrode shelf 6, and the penetrating connection body 8 is connected to the negative electrode shelf 5. The positive pole 9 is connected to the positive electrode terminal 16 outside the lid 15. Each of the penetrating connection bodies 8 passes through a through-hole provided in the partition 13 to connect the elements 11 of the adjacent cell chambers 14 in series.

The positive electrode shelf 6 is formed by welding the lug parts 2a, provided on the upper parts of the respective positive electrode plates 2, to each other by a cast-on-strap method or a burning method. The negative electrode shelf 5 is also formed by welding the lug parts 3a, provided on the upper parts of the respective negative electrode plates 3, to each other in accordance with the case of the positive electrode shelf 6.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

### EXAMPLES

Hereinafter, the present invention will be specifically described based on Examples and Comparative Examples, but the present invention is not limited to the following Examples.

### <<Lead-acid batteries C1 to C8 and E1 to E11>>

### (1) Preparation of positive electrode plate

A lead powder, water, and dilute sulfuric acid are mixed to obtain a positive electrode paste. The positive electrode paste is applied to an expanded grid made of a Pb-Ca-Sn alloy as a positive current collector. The applied positive electrode paste is filled in a mesh part of the grid by pressing the applied positive electrode paste against the mesh part using a jig, cured, and dried. Thus, an unformed positive electrode plate is obtained. The surface roughness Rz of the positive electrode plate is adjusted as shown in Table 1 by changing the roughness of the surface of the jig which presses the positive electrode paste.

### (2) Preparation of negative electrode plate

A lead powder, water, dilute sulfuric acid, sodium lignin sulfonate as an organic expander, barium sulfate, and carbon black are mixed to obtain a negative electrode paste. At this time, the amounts of the organic expander, barium sulfate, and carbon black are adjusted such that the contents of the respective components in a negative electrode material, all of which are determined by the procedures described above, are 0.2% by mass, 0.6% by mass, and 0.3% by mass, respectively. The negative electrode paste is applied to an expanded grid made of a Pb-Ca-Sn alloy. The applied negative electrode paste is filled in a mesh part of the grid by pressing the applied negative electrode paste against the mesh part using a jig, cured, and dried. Thus, an unformed negative electrode plate is obtained. The surface roughness Rz of the negative electrode plate is adjusted as shown in Table 1 by changing the roughness of the surface of the jig which presses the negative electrode paste.

### (3) Preparation of test battery

A test battery has a rated voltage of 2 V/cell and a rated 20-hour rate capacity of 60 Ah.

The unformed positive electrode plate is accommodated in a bag-shaped separator. However, in C7 and C8, the unformed negative electrode plate is accommodated in a bag-shaped separator. An element was composed of eight unformed negative electrode plates and seven unformed positive electrode plates. The bag-shaped separator is made of a polyethylene microporous membrane, and includes first ribs protruding toward the positive electrode plate at rib intervals shown in Table 1. The average thickness of the base part in the bag-shaped separator is 0.25 mm.

The element is inserted into a container, a predetermined amount of an aqueous sulfuric acid solution as an electrolyte solution is injected into the container, and formation is performed in the container to prepare a flooded-type lead-acid battery (test battery). At this time, (D - T), the average value Mc of cross-sectional areas of the first rib inner closed spaces, and the ratio Ra determined by the procedures described above are adjusted using spacers so as to be values shown in Table 1. The specific gravity of the electrolyte solution in a lead-acid battery in a full charge state at 20°C is 1.285. The lead-acid battery is fully charged by the formation. In E1 to E11, ratios Rb determined by the procedures described above are 80% or more (more specifically, 95% or more).

The PSOC life performance (17.5% DOD life) and the deep discharge life performance (50% DOD life) of the test battery prepared as described above are evaluated by the methods described above. In Table 1, the evaluation results of the lead-acid battery are shown as relative values when the evaluation results of the lead-acid battery C1 are 100. The evaluation of each life performance indicates that a higher effect is obtained as the numerical value is larger.

Table 1 shows the results. The lead-acid batteries E1 to E11 are Examples, and the lead-acid batteries C1 to C8 are Comparative Examples.

**[Table 1]**

| | Electrode packaged in separator | D-T (mm) | Rz of positive electrode plate (mm) | Rz of negative electrode plate (mm) | Cross-sectional area of rib inner closed space Mc (mm²) | Rib interval (mm) | Ratio Ra | 17.5% DOD life | 50% DOD life |
|---|---|---|---|---|---|---|---|---|---|
| C1 | Positive electrode | 0.1 | 0.5 | 0.5 | - | 7 | 0.27 | 100 | 100 |
| C2 | Positive electrode | 0.1 | 0.1 | 0.1 | - | 7 | 0.27 | 100 | 100 |
| C3 | Positive electrode | 0 | 0.5 | 0.5 | - | 7 | 0.27 | 127 | 109 |
| C4 | Positive electrode | 0 | 0.5 | 0.1 | - | 7 | 0.27 | 145 | 109 |
| C5 | Positive electrode | 0 | 0.1 | 0.1 | 7.4 | 13.5 | 0.27 | 145 | 118 |
| E1 | Positive electrode | 0 | 0.1 | 0.1 | 7.2 | 13 | 0.27 | 196 | 191 |
| E2 | Positive electrode | 0 | 0.1 | 0.1 | 6.6 | 12 | 0.27 | 206 | 205 |
| E3 | Positive electrode | 0 | 0.1 | 0.1 | 3.9 | 7 | 0.27 | 216 | 227 |
| E4 | Positive electrode | 0 | 0.1 | 0.1 | 2.2 | 4 | 0.27 | 211 | 236 |
| C6 | Positive electrode | 0 | 0.1 | 0.1 | 1.7 | 3 | 0.27 | 145 | 236 |
| C7 | Negative electrode | 0 | 0.1 | 0.1 | 7.2 | 13 | 0.27 | 88 | 89 |
| C8 | Negative electrode | 0 | 0.1 | 0.1 | 3.9 | 7 | 0.27 | 90 | 91 |
| E5 | Positive electrode | 0 | 0.1 | 0.1 | 6.6 | 12 | 0.27 | 206 | 205 |
| E6 | Positive electrode | 0 | 0.1 | 0.1 | 6.6 | 12 | 0.26 | 279 | 223 |
| E7 | Positive electrode | 0 | 0.1 | 0.1 | 6.6 | 12 | 0.18 | 294 | 225 |
| E8 | Positive electrode | 0 | 0.1 | 0.1 | 6.6 | 12 | 0.15 | 298 | 227 |
| E9 | Positive electrode | 0 | 0.1 | 0.1 | 7.2 | 13 | 0.26 | 275 | 209 |
| E6 | Positive electrode | 0 | 0.1 | 0.1 | 6.6 | 12 | 0.26 | 279 | 223 |
| E10 | Positive electrode | 0 | 0.1 | 0.1 | 3.9 | 7 | 0.26 | 284 | 245 |
| E11 | Positive electrode | 0 | 0.1 | 0.1 | 2.2 | 4 | 0.26 | 270 | 250 |

As shown in Table 1, when the average value Mc of cross-sectional areas of rib inner closed spaces in (d) is more than 7.2 mm², a very large effect of improving both the PSOC life performance (17.5% DOD life) and the deep discharge life performance (50% DOD life) cannot be obtained (C5) even if the conditions of (a) the separator includes the first rib and accommodates the positive electrode plate, (b) the Rz of the positive electrode plate and the negative electrode plate is 0.4 mm or less, and (c) D - T ≤ 0 mm are satisfied. When the average value Mc of cross-sectional areas in (d) is less than 2.2 mm², the deep discharge life performance is high, however, the effect of improving the PSOC life performance is small (C6). Meanwhile, when the average value Mc of cross-sectional areas in (d) is in the range of 2.2 mm² or more and 7.2 mm² or less, excellent results are obtained in both the PSOC life performance and the deep discharge life performance (E1 to E4). In the case where the average value Mc ≤ 7.2 mm² of the cross-sectional areas in (d), the PSOC life performance and the deep discharge life performance are significantly improved as compared with the case where the average value Mc > 7.2 mm² of the cross-sectional areas, and the case of Mc ≤ 7.2 mm² can be said to have criticality (comparison between C5 and E1). In the case where the average value Mc ≥ 2.2 mm² of the cross-sectional areas, the PSOC life performance is remarkably improved as compared with the case where the average value Mc < 2.2 mm² of the cross-sectional areas, and the case of Mc ≥ 2.2 mm² can be said to have criticality (comparison between E4 and C6). Even in the case of satisfying (b) to (d), when the negative electrode plate is accommodated in the bag-shaped separator (not satisfying (a)), both the PSOC life performance and the deep discharge life performance are lower than those of C1 of the conventional battery (C7, C8).

When the ratio Ra is 0.27 or less, high PSOC life performance and deep discharge life performance are obtained. When the ratio Ra is 0.26 or less, both the PSOC life performance and the deep discharge life performance are greatly improved as compared with the case where the ratio Ra is 0.27 (comparison between E5 and E6 to E11). Excellent PSOC life performance and deep discharge life performance when the ratio Ra is 0.26 or less are obtained in the entire range of 2.2 mm² ≤ Mc ≤ 7.2 mm² (E6, E9 to E11).

### INDUSTRIAL APPLICABILITY

A lead-acid battery according to one aspect of the present invention is suitable for use in a vehicle equipped with an idle reduction system as a lead-acid battery for IS, for example. The lead-acid battery can be suitably used as, for example, a power source for starting a vehicle (automobiles, motorcycles, etc.), and an industrial energy storage apparatus (for example, a power source of an electric vehicle (such as forklift) or the like). These are merely examples, and the application of the lead-acid battery is not limited only to these.

### DESCRIPTION OF REFERENCE SIGNS

1: lead-acid battery
2: positive electrode plate
2a: lug part
3: negative electrode plate
3a: lug part
4: separator
5: negative electrode shelf
6: positive electrode shelf
7: negative pole
8: penetrating connection body
9: positive pole
11: element
12: container
13: partition
14: cell chamber
15: lid
16: positive electrode terminal
17: negative electrode terminal
18: vent plug

## Claims

1. A lead-acid battery (1) comprising:
at least one element (11);
an electrolyte solution; and
a cell chamber (14) housing the element (11) and the electrolyte solution,
wherein the element (11) includes a positive electrode plate (2), a negative electrode plate (3), and a bag-shaped separator (4) interposed between the positive electrode plate (2) and the negative electrode plate (3),
the separator (4) includes a base part and a plurality of ribs protruding from the base part toward the positive electrode plate (2) and extending along a longitudinal direction, and accommodates the positive electrode plate (2), wherein the longitudinal direction of the separator is a direction along the height direction of the plate in a state where the lead-acid battery housing the separator is placed in a normally used state,
a surface roughness of each of the positive electrode plate (2) and the negative electrode plate (3) is 0.4 mm or less, wherein the surface roughness of the respective plate is an average value of maximum height roughnesses Rz of 18 points measured at each of 9 divided points for each of both main surfaces of the plate, wherein the maximum height roughness Rz refers to a difference (Rv + Rp) from a mostly depressed portion (maximum valley depth Rv) to a mostly protruding portion (maximum peak height Rp) of the main surface,
a difference (= D - T) between a distance D between the positive electrode plate (2) and the negative electrode plate (3) and a maximum thickness T of the separator (4) is 0 mm or less, and
an average value Mc of cross-sectional areas of spaces formed between the ribs adjacent to each other between the positive electrode plate (2) and the separator (4) in a direction parallel to a horizontal direction is 2.2 mm² or more and 7.2 mm² or less.

2. The lead-acid battery (1) according to claim 1, wherein an average value of intervals between the adjacent ribs is 4 mm or more.

3. The lead-acid battery (1) according to claim 1 or 2, wherein an average value of intervals between the adjacent ribs is 13 mm or less.

4. The lead-acid battery (1) according to claim 1 or 2, wherein an average value of intervals between the adjacent ribs is 5 mm or more.

5. The lead-acid battery (1) according to claim 1 or 2, wherein an average value of intervals between the adjacent ribs is 7 mm or more.

6. The lead-acid battery (1) according to claim 1 or 2, wherein an average value of intervals between the adjacent ribs is 12 mm or less.

7. The lead-acid battery (1) according to claim 1 or 2, wherein the average value Mc of cross-sectional areas is 3.5 mm² or more.

8. The lead-acid battery (1) according to claim 1 or 2, wherein the average value Mc of cross-sectional areas is 3.9 mm² or more.

9. The lead-acid battery (1) according to claim 1 or 2, wherein the average value Mc of cross-sectional areas is 6.8 mm² or less.

10. The lead-acid battery (1) according to claim 1 or 2, wherein the average value Mc of cross-sectional areas is 6.6 mm² or less.

11. The lead-acid battery (1) according to claim 1 or 2, wherein in a cross section parallel to a bottom part of the cell chamber (14) of the lead-acid battery (1) and passing through a position 5 cm in height from the bottom part, a ratio Ra (= Se/Sg) of a cross-sectional area Se of the electrolyte solution present between an outer edge of the element (11) and an inner edge of the cell chamber (14) housing the element (11) to a cross-sectional area Sg of the element (11) is 0.27 or less.

12. The lead-acid battery (1) according to claim 1 or 2, wherein in a cross section parallel to a bottom part of the cell chamber (14) of the lead-acid battery (1) and passing through a position 5 cm in height from the bottom part, a ratio Ra (= Se/Sg) of a cross-sectional area Se of the electrolyte solution present between an outer edge of the element (11) and an inner edge of the cell chamber (14) housing the element (11) to a cross-sectional area Sg of the element (11) is 0.26 or less.

## Patentansprüche

1. Bleisäurebatterie (1), umfassend:
mindestens ein Element (11);
eine Elektrolytlösung; und
eine Zellenkammer (14), die das Element (11) und die Elektrolytlösung aufnimmt,
wobei das Element (11) eine Positivelektrodenplatte (2), eine Negativelektrodenplatte (3) und einen taschenförmigen Separator (4), der zwischen der Positivelektrodenplatte (2) und der Negativelektrodenplatte (3) eingefügt, aufweist,
der Separator (4) ein Basisteil und eine Mehrzahl von Rippen, die aus dem Basisteil in Richtung der Positivelektrodenplatte (2) herausragen und sich entlang einer Längsrichtung erstrecken, aufweist, und die Positivelektrodenplatte (2) aufnimmt, wobei die Längsrichtung des Separators eine Richtung entlang der Höhenrichtung der Platte in einem Stadium ist, wo sich die den Separator aufnehmende Bleisäurebatterie in einem normalerweise verwendeten Zustand befindet,
eine Oberflächenrauheit jeder der Positivelektrodenplatte (2) und der Negativelektrodenplatte (3) 0,4 mm oder weniger beträgt, wobei die Oberflächenrauheit der jeweiligen Platte ein Mittelwert der maximalen Höhe der Rauheit Rz, von 18 Punkten ist, gemessen an jedem von 9 verteilten Punkte bei jeder der beiden Hauptflächen der Platte, wobei sich die maximale Höhe der Rauheit Rz auf eine Differenz (Rv + Rp) von einem am stärksten vertieften Teil (maximale Taltiefe Rv) zu einem am stärksten herausragenden Teil (maximale Spitzenhöhe Rp) der Hauptfläche bezieht,
eine Differenz (= D - T) zwischen einem Abstand D zwischen der Positivelektrodenplatte (2) und der Negativelektrodenplatte (3) und einer maximalen Dicke T des Separators (4) 0 mm oder weniger beträgt, und
ein Mittelwert Mc der Querschnittsflächen von Räumen, die zwischen den zueinander benachbarten Rippen zwischen der Positivelektrodenplatte (2) und dem Separator (4) in einer Richtung parallel zu einer horizontalen Richtung gebildet, sind 2,2 mm² oder mehr und 7,2 mm² oder weniger beträgt.

2. Bleisäurebatterie (1) nach Anspruch 1, wobei ein Mittelwert der Abstände zwischen den benachbarten Rippen 4 mm oder mehr beträgt.

3. Bleisäurebatterie (1) nach Anspruch 1 oder 2, wobei ein Mittelwert der Abstände zwischen den benachbarten Rippen 13 mm oder weniger beträgt.

4. Bleisäurebatterie (1) nach Anspruch 1 oder 2, wobei ein Mittelwert der Abstände zwischen den benachbarten Rippen 5 mm oder mehr beträgt.

5. Bleisäurebatterie (1) nach Anspruch 1 oder 2, wobei ein Mittelwert der Abstände zwischen den benachbarten Rippen 7 mm oder mehr beträgt.

6. Bleisäurebatterie (1) nach Anspruch 1 oder 2, wobei ein Mittelwert der Abstände zwischen den benachbarten Rippen 12 mm oder weniger beträgt.

7. Bleisäurebatterie (1) nach Anspruch 1 oder 2, wobei der Mittelwert Mc der Querschnittsflächen 3,5 mm² oder mehr beträgt.

8. Bleisäurebatterie (1) nach Anspruch 1 oder 2, wobei der Mittelwert Mc der Querschnittsflächen 3,9 mm² oder mehr beträgt.

9. Bleisäurebatterie (1) nach Anspruch 1 oder 2, wobei der Mittelwert Mc der Querschnittsflächen 6,8 mm² oder weniger beträgt.

10. Bleisäurebatterie (1) nach Anspruch 1 oder 2, wobei der Mittelwert Mc der Querschnittsflächen 6,6 mm² oder weniger beträgt.

11. Bleisäurebatterie (1) nach Anspruch 1 oder 2, wobei bei einem Querschnitt, der parallel zu einem unteren Teil der Zellenkammer (14) der Bleisäurebatterie (1) und durch eine Position in einer Höhe von 5 cm von dem unteren Teil verläuft, ein Verhältnis Ra (= Se/Sg) einer Querschnittsfläche Se der Elektrolytlösung, die zwischen einem Außenrand des Elements (11) und einem Innenrand der das Element (11) aufnehmenden Zellenkammer (14) vorhanden ist, zu einer Querschnittsfläche Sg des Elements (11) 0,27 oder weniger beträgt.

12. Bleisäurebatterie (1) nach Anspruch 1 oder 2, wobei bei einem Querschnitt, der parallel zu einem unteren Teil der Zellenkammer (14) der Bleisäurebatterie (1) und durch eine Position 5 cm in der Höhe von dem unteren Teil verläuft, ein Verhältnis Ra (= Se/Sg) einer Querschnittsfläche Se der Elektrolytlösung, die zwischen einem Außenrand des Elements (11) und einem Innenrand der das Element (11) aufnehmenden Zellenkammer (14) vorhanden ist, zu einer Querschnittsfläche Sg des Elements (11) 0,26 oder weniger beträgt.

## Revendications

1. Batterie au plomb-acide (1) comprenant :
au moins un élément (11) ;
une solution électrolytique ; et
une chambre de cellule (14) logeant l'élément (11) et la solution électrolytique,
dans laquelle l'élément (11) inclut une plaque d'électrode positive (2), une plaque d'électrode négative (3) et un séparateur en forme de sac (4) interposé entre la plaque d'électrode positive (2) et la plaque d'électrode négative (3),
le séparateur (4) inclut une partie de base et une pluralité de nervures faisant saillie depuis la partie de base vers la plaque d'électrode positive (2) et s'étendant le long d'une direction longitudinale, et reçoit la plaque d'électrode positive (2), dans laquelle la direction longitudinale du séparateur est une direction le long de la direction de hauteur de la plaque dans un état dans lequel la batterie au plomb-acide logeant le séparateur est placée dans un état d'utilisation normale,
une rugosité de surface de chacune parmi la plaque d'électrode positive (2) et de la plaque d'électrode négative (3) est de 0,4 mm ou moins, dans laquelle la rugosité de surface de la plaque respective est une valeur moyenne des rugosités de hauteur maximale Rz de 18 points mesurées à chacun de 9 points de subdivision pour chacune des deux surfaces principales de la plaque, dans laquelle la rugosité de hauteur maximale Rz désigne une différence (Rv + Rp) entre une partie la plus en creux (profondeur maximale de vallée Rv) et une partie la plus en saillie (hauteur maximale de pic Rp) de la surface principale,
une différence (= D - T) entre une distance D entre la plaque d'électrode positive (2) et la plaque d'électrode négative (3) et une épaisseur maximale T du séparateur (4) est de 0 mm ou moins, et
une valeur moyenne Mc des aires de section transversale des espaces formés entre les nervures adjacentes les unes aux autres, entre la plaque d'électrode positive (2) et le séparateur (4), dans une direction parallèle à une direction horizontale, est de 2,2 mm² ou plus et de 7,2 mm² ou moins.

2. Batterie au plomb-acide (1) selon la revendication 1, dans laquelle une valeur moyenne des intervalles entre les nervures adjacentes est de 4 mm ou plus.

3. Batterie au plomb-acide (1) selon la revendication 1 ou 2, dans laquelle une valeur moyenne des intervalles entre les nervures adjacentes est de 13 mm ou moins.

4. Batterie au plomb-acide (1) selon la revendication 1 ou 2, dans laquelle une valeur moyenne des intervalles entre les nervures adjacentes est de 5 mm ou plus.

5. Batterie au plomb-acide (1) selon la revendication 1 ou 2, dans laquelle une valeur moyenne des intervalles entre les nervures adjacentes est de 7 mm ou plus.

6. Batterie au plomb-acide (1) selon la revendication 1 ou 2, dans laquelle une valeur moyenne des intervalles entre les nervures adjacentes est de 12 mm ou moins.

7. Batterie au plomb-acide (1) selon la revendication 1 ou 2, dans laquelle la valeur moyenne Mc des aires de section transversale est de 3,5 mm² ou plus.

8. Batterie au plomb-acide (1) selon la revendication 1 ou 2, dans laquelle la valeur moyenne Mc des aires de section transversale est de 3,9 mm² ou plus.

9. Batterie au plomb-acide (1) selon la revendication 1 ou 2, dans laquelle la valeur moyenne Mc des aires de section transversale est de 6,8 mm² ou moins.

10. Batterie au plomb-acide (1) selon la revendication 1 ou 2, dans laquelle la valeur moyenne Mc des aires de section transversale est de 6,6 mm² ou moins.

11. Batterie au plomb-acide (1) selon la revendication 1 ou 2, dans laquelle, dans une section transversale parallèle à une partie de fond de la chambre de cellule (14) de la batterie au plomb-acide (1) et passant par une position à une hauteur de 5 cm à partir de la partie de fond, un rapport Ra (= Se/Sg) d'une aire de section transversale Se de la solution électrolytique présente entre un bord extérieur de l'élément (11) et un bord intérieur de la chambre de cellule (14) logeant l'élément (11) à une aire de section transversale Sg de l'élément (11) est de 0,27 ou moins.

12. Batterie au plomb-acide (1) selon la revendication 1 ou 2, dans laquelle, dans une section transversale parallèle à une partie de fond de la chambre de cellule (14) de la batterie au plomb-acide (1) et passant par une position à une hauteur de 5 cm à partir de la partie de fond, un rapport Ra (= Se/Sg) d'une aire de section transversale Se de la solution électrolytique présente entre un bord extérieur de l'élément (11) et un bord intérieur de la chambre de cellule (14) logeant l'élément (11) à une aire de section transversale Sg de l'élément (11) est de 0,26 ou moins.
